# EUROPÄISCHE PATENTSCHRIFT

(11) **EP 2 190 798 B1**
(45) Veröffentlichungstag und Bekanntmachung des Hinweises auf die Patenterteilung: **03.08.2016**
(21) Anmeldenummer: 08803743.7
(22) Anmeldetag: 05.09.2008
(51) Int. Cl.: C04B 28/34

(54) **ZUSAMMENSETZUNG AUF BASIS PHOSPHATISCHER ROHSTOFFE UND VERFAHREN ZUR HERSTELLUNG DERGLEICHEN**
COMPOSITION BASED ON PHOSPHATIC RAW MATERIALS AND METHOD FOR PRODUCING THE SAME
COMPOSITION À BASE DE MATIÈRES PREMIÈRES PHOSPHATÉES ET PROCÉDÉ DE PRODUCTION DE CELLE-CI

(30) Priorität: 10.09.2007 DE 102007042669
(43) Veröffentlichungstag der Anmeldung: 02.06.2010
(73) Patentinhaber: Technology-Trade MS GmbH, 66125 Saarbrücken (DE)
(72) Erfinder: SCHICHTEL, Martin, 66125 Dudweiler (DE); JODLAUK, Jörg, 66606 St. Wendel/ OT Niederkirchen (DE)
(74) Vertreter: Claessen, Rolf
(86) Internationale Anmeldenummer: PCT/EP2008/061774
(87) Internationale Veröffentlichungsnummer: WO 2009/034031

(56) Entgegenhaltungen:
- EP-A- 0 282 240
- EP-A- 0 615 953
- WO-A-2006/070021
- DE-A1- 2 738 247
- DE-A1- 10 065 075
- US-A- 2 865 772
- US-A- 4 174 227
- US-A- 4 212 680
- HUDSON, L.K., MISRA, C. & WEFERS, K.: "Ullmann`s Encyclopedia of Industrial Chemistry: Volume A1: Abrasives to Aluminium Oxide" 1985, VCH VERLAGSGESELLSCHAFT MBH , WEINHEIM , XP002510997 Seite 589; Tabelle 8

## Beschreibung

Die Erfindung betrifft eine Zusammensetzung mit einem anorganischen phosphatischen Bindemittel und Füllstoffen mit einer hohen spezifischen Oberfläche, deren Verwendung und Herstellung.

Beton ist ein künstliches Gestein aus Zement (hydraulisches Bindemittel), Betonzuschlag bzw. Gesteinskörnung und Anmachwasser. Weiterhin kann diesem Gemenge Betonzusatzstoffe und Betonzusatzmittel zugegeben werden. Kernmaterial ist hierbei das hydraulische Bindemittel, dessen Zusammensetzung die jeweils bestmögliche Kombination der gewünschten Produkteigenschaften gewährleisten soll. Es sind Zemente mit den unterschiedlichsten Eigenschaften bekannt. Dieses hauptsächlich kieselsaure Calcium, mit Anteilen aus Aluminium und Eisen liegt in der Regel als kompliziertes Gemisch vor. Dieser anorganische, nichtmetallische Feststoff erstarrt durch Zusatz von Anmachwasser infolge chemischer Reaktionen selbständig. Zement reagiert unter Aufnahme des Anmachwassers (auch in wasserreicher Atmospähre) zu Calciumsilikathydraten, die feine nadelförmige Kristalle ausbilden, welche sich untereinander verzahnen und dadurch hohe Festigkeiten ausbilden.

Beispielsweise wird Portlandzement durch die Vermahlung von Klinker und Gips bzw. Anhydrit, bestehend aus circa 58 bis 66% Kalziumoxid, 18 bis 26% Siliziumdioxid, 4 bis 10% Aluminiumoxid und 2 bis 5% Eisenoxid hergestellt. Diese Materialien durchlaufen einen Brennprozess im Drehrohrofen, bei dem sich aus diesen Bestandteilen Mineralien bilden, die für die besonderen Eigenschaften von Zement von entscheidender Bedeutung sind. Die wichtigsten dieser Verbindungen sind hierbei das Tricalciumsilikat, (3 CaO × SiO₂), das Dicalciumsilikat (2 CaO × SiO₂), das Tricalciumaluminat (3 CaO × Al₂O₃) und das Tetracalciumaluminatferrit (4 CaO × Al₂O₃ × Fe₂O₃). Dieser Prozess führt nebenbei auch zu einer hohen Kohlendioxidbelastung. Zur Herstellung von etwa 1,4 Milliarden Tonnen Zement pro Jahr (2005), der im Schnitt 60% CaO enthält, ergibt sich ein jährlicher CO₂-Ausstoß von etwa 1 Milliarde Tonne Kohlendioxid, welches in die Gesamt-CO₂-Bilanz mit 4% jährlich eingeht (Quelle: Carbon Dioxide Information Analysis Center).

Außer der chemischen und mineralogischen Zusammensetzung ist auch die Feinheit eines Zementes ausschlaggebend für seine Eigenschaften. Generell bilden feinere Zemente höhere Festigkeiten aus. Dieses "Fein" steht in unmittelbaren Zusammenhang mit der spezifischen Oberfläche des Materials, die oft zwischen 2.500 und 5.000 cm²/g, liegt. EN 197 unterscheidet zwischen drei verschiedenen Festigkeitsklassen (32,5, 42,5 und 52,5 MPa), welche wiederum in langsam- und schnellerhärtende (r = rapid) Zemente unterteilt ist, und fünf verschiedene Arten (CEM I = Portlandzement, CEM II = Portlandkompositzement, CEM III = Hochofenzement CEM IV = Puzzolanzement, CEM V = Kompositzement) aufweist.

Nach Zugabe des Anmachwassers laufen in diesem hydraulischen Bindemittel verschiedene Reaktionen ab, die insbesondere dass Erstarren und Erhärten des Zements zur Folge haben. Es entstehen wasserhaltiger Verbindungen. Im Allgemeinen reagiert der Zement in einem verhältnismäßig wasserarmen, plastischen Gemisch mit Wasserzementwerten zwischen etwa 0,3 und 0,6. Diese Hydratation führt zum Anstreifen des Zementleims. Überschreitet das Ansteifen ein bestimmtes Maß, so spricht man von Erstarren. Die danach fortschreitende Verfestigung wird Erhärten genannt.

Ursache des Ansteifens, Erstarrens und Erhärtens ist die Bildung eines mehr oder weniger starren Gefüges aus Hydratationsprodukten, das den wassergefüllten Zwischenraum zwischen den Feststoffpartikeln des Zementleims, Mörtels oder Betons ausfüllt. Feste Bezugsgröße hierfür ist der Wasserzementwert, der den zeitlichen Verlauf, nicht jedoch die Art der Hydratationsprodukte, in Abhängigkeit von der Größe des Zwischenraums definiert. Die festigkeitsbildenden Hydratationsprodukte sind bei den silicatischen Zementen in erster Linie Calciumsilicathydrate und beim Tonerdezement Calciumaluminathydrate. Weitere Hydratationsprodukte sind Calciumhydroxid, Calciumferrithydrate, sulfathaltige Hydrate und verwandte Verbindungen wie das Hydrogranat. Von besonderer Bedeutung sind die Calciumsilicathydrate.

Kurz nach dem ersten Kontakt mit Wasser setzt eine kurze, intensive Hydratation ein. Aus der Reaktion von Calzium- und Sulfationen mit Tricalciumaluminat bilden sich auf den Oberflächen der Klinkerpartikel kurze, hexagonal säulenförmige Ettringitkristalle. Daneben kommt es, ausgehend vom Tricalciumsilicat, zur Bildung von ersten Calciumsilicathydraten (CSH) in kolloidaler Form. Durch die Bildung einer dünnen Lage von Hydratationsprodukten auf den Klinkerpartikeln verebbt diese erste Hydratationsperiode, und die Ruheperiode oder Induktionsperiode, während der praktisch keine weitere Hydratation stattfindet, beginnt. Die ersten Hydratationskeime sind zu klein, um den Raum zwischen den Zementpartikeln zu überbrücken und ein festes Gefüge aufzubauen. Damit bleiben die Zementpartikel noch gegeneinander beweglich, d. h. die Konsistenz des Zementleims ist nur wenig steifer geworden. Das Erstarren des Zementleims beginnt nach etwa ein bis drei Stunden, wenn sich erste, noch sehr feine Calciumsilicathydratkristalle auf den Klinkerpartikeln bilden. Nach Abschluss der Ruheperiode setzt erneut eine intensive Hydratation der Klinkerphasen ein. Diese dritte Periode (Beschleunigungsperiode) beginnt nach etwa vier Stunden und endet nach 12 bis 24 Stunden. Dabei baut sich ein Grundgefüge auf, bestehend aus CSH-Faserbüscheln bzw. CSH-Blattstrukturen, plattigem Calciumhydroxid und in die Länge wachsenden Ettringitkristallen. Durch die größeren Kristalle werden die Räume zwischen den Zementpartikeln überbrückt. Im weiteren Hydratationsverlauf nimmt die Verfestigung stetig zu, jedoch mit reduzierter Hydratationsrate. Das Gefüge verdichtet sich dabei und die Poren werden zunehmend ausgefüllt. Die chemischen Reaktionen der Klinkerphasen mit dem Anmachwasser lassen sich vereinfacht wie folgt darstellen:

2 (3CaO.SiO₂) +6H₂O → 3CaO.2SiO₂.3H₂O + 3 Ca(OH)₂

2 (2CaO.SiO₂) + 4 H₂O → 3CaO.2SiO₂.3H₂O + Ca(OH)₂

3CaO.Al₂O₃ + 12 H₂O + Ca(OH)₂ → 4CaO.Al₂O₃.13H₂O

4CaO.Al₂O₃.Fe₂O₃ + 13 H₂O → 4CaO.Al₂O₃.Fe₂O₃.13H₂O

Die Hydratationsprodukte bilden sich nicht gleichzeitig, sondern entsprechend ihrer Reaktionsfähigkeit mit unterschiedlicher Geschwindigkeit und nach unterschiedlicher Dauer. Der Übergang von Erstarren zum Erhärten erfolgt "fließend".

In Kombination mit weiteren Füllstoffen entsteht auf diese Weise der Beton, der in der Regel binnen 28 Tagen seine Endfestigkeit entwickelt hat. Neben der entstehenden Frühfestigkeit ist eine wesentliche Eigenschaft des Betons die Rissfreiheit und damit ein möglichst geringes Schwinden beim Erhärten sowie eine gute Chemikalienbeständigkeit. Für letztere Charaktereigenschaft ist ein entsprechend dichter und rissfreier Beton herzustellen, der ebenso eine geringe Gasdurchlässigkeit aufweist. Bei einem solchen Beton müssen allerdings wieder Kompromisse in Bezug auf Früh- und Endfestigkeit gemacht werden. Dies steht in unmittelbaren Zusammenhang für die Bildung des Porenraums. Durch Austrocknen, Schwinden und autogenes Schwinden können bereits in der Erstarrungsphase Defekte auftreten.

In späteren Phasen kann das gebundene Hydratwasser das Porengerüst bei niedrigen Temperaturen durch Bildung von Eis aufweiten, teilweise sogar sprengen. Weiterhin besteht für Stahlarmierungen bei ungenügender Dichte und Vorbehandlung starke Korrosionsgefahr. Im Umkehrfall beginnt bei erhöhten Temperaturen, beispielsweise zwischen 100°C und 250°C, teilweise sogar schon bei 80°C eine Dehydratation des Gefüges. Dies hat einen Festigkeitsabfall von bis zu 25% der Gesamtfestigkeit zur Folge. Die Nachteile, die durch die Herstellung von Beton entstehen sind mannigfaltig, so zählen, neben den bisher aufgeführten Eigenschaftsverlusten, schlechte Zugfestigkeit, geringe Chemikalienstabilität (insbes. Säurestabilität), Festigkeitsverluste bei aggressiven Umgebungen (beispielsweise Kernreaktoren) genauso dazu wie schlechte Durchfärbbarkeit, Ausblühneigung, starke Dehydradationsneigung.

DE 2621110 beschreibt den Einsatz von Zellenglaskörpern, die mit Metaphosphat umgesetzt werden, wobei Glas und Phosphat in einer Art Aussalzeffekt als Säure und Base reagieren.

DE 2900191 beschreibt phosphathaltige Silikatschaumstoffe, wobei Wasserglas mit Phosphat umgesetzt wird und das Phosphat der Härter aber nicht die Matrix ist.

DE 4434627 C1 beschreibt einen Zweikomponentensilikatkleber, wobei Phosphat der Härter ist.

DE 3242352 A1 beschreibt Aluminiumsilikate und deren Herstellung un-ter einem gewissen Druck und erhöhter Temperatur, wobei das Silikat die Matrix und Aluminium die Dotierung ist.

DE 3006551 beschreibt einen Kaliumsilikatzement, bei dem Aluminiumphosphat als Härter eingesetzt wird und die Basis ein Silikatwerkstoff ist.

EP 0 615 953 A1 beschreibt Aluminiumsphosphat, Verfahren zu seiner Herstellung sowie seine Verwendung zur Herstellung von bindemittelhaltigen Materialien und keramischen Teilen.

EP 0 282 240 A1 beschreibt eine Zementzusammensetzungen und ihre Anwendung.

Aufgabe der Erfindung ist es, ein Materialgemenge zu finden, welches anstelle hydraulischen Bindemitteln phosphatische Bindemittel beinhaltet, die (auch in Abmischung mit Füllstoffen und Prozesshilfsmitteln) bei
Temperaturen unter 121°C stabile und durchgehärtete Formkörper ergeben.

Eine weitere Aufgabe der Erfindung ist es, neue Betongemenge auf Basis von phosphatischen Bindemitteln als Binderphase anzugeben, die sich zur Herstellung beispielsweise von Formteilen eignen und gegenüber dem Stand der Technik verbesserte Eigenschaften, beispielsweise höhere Materialdichte, geringeres Porenvolumen, hohe Chemikalienbeständigkeit, extrem hohe Druckfestigkeit, gesteigerte Zugfestigkeit (auch ohne Fasern) aufweisen.

Die der Erfindung zu Grunde liegende Aufgabe wird durch die Zusammensetzung mit den Merkmalen des Patentanspruchs 1 gelöst.

Die erfindungsgemäße Zusammensetzung kann als Betonzusammensetzung aufgefasst werden, da sie prinzipiell ähnlich eingesetzt und hergestellt werden kann. Chemisch gesehen wird jedoch beispielsweise eher kein Zement sondern phosphatisches, anorganisches Bindemittel eingesetzt.

Eine oxidische, hydroxidische, oder oxyhdydryische Oberfläche im Sinne der Erfindung bedeutet, dass die Oberfläche weitestgehend oxidisch, hydroxidisch, oder oxyhdydryisch ist. Beispielsweise ist die Oberfläche mindestens zu 90 % oxidisch, hydroxidisch, oder oxyhdydryisch.

Um das der Erfindung zu Grunde liegende Problem sinnvoll lösen zu können, muss man von der ursprünglichen Definition von Beton Abstand nehmen: Beton [französisch, aus lateinisch Bitumen »Erdharz«] der, Baustoffgemenge aus Bindemitteln (z. B. Zement, Bitumen, Silikat, Ton), Zuschlagstoffen (z. B. Kies, Schotter, Splitt) und Wasser. Die Bindemittel müssen im Falle dieser Erfindung um die Gruppe der phosphatischen Bindemittel erweitert werden. Hiermit ist aber nicht die Gruppe der Phosphatzemente gemeint, die in der Zahnheilkunde Einsatz finden. Die Phosphatzemente der Zahnheilkunde sind in der Regel ein Gemenge aus 80-90% Zinkoxid, 10% Magnesiumoxid, 6% Calciumfluorid, 4% Siliciumoxid und 1% Aluminiumoxid welche mit 55%Phosphorsäure abgemischt werden. Ein solches Material ist, alleine schon aufgrund der konzentrierten Mineralsäure nicht praxisnah und auf Baustellen bzw. Werken einsetzbar.

Das Ziel der Entwicklung neuer Zusammensetzung auf Basis phosphatischer Rohstoffe und Verfahren zur Herstellung dergleichen, war daher der Aufbau eines Alternativmaterials, welches den Einsatz in kritischen Gebieten genauso ermöglicht, wie das nicht auftreten negativer Eigenschaften wie Ausblühtendenzen, schlechte Zugfestigkeit, schlechte Chemikalienstabilität, u.s.w. Dies wird durch den Ersatz hydraulischer Bindemittel gegen chemisch dreidimensional vernetzende anorganische Phosphatbindemittel erreicht.

Mit den erfindungsgemäßen Zusammensetzungen auf Basis phosphatischer Rohstoffe lassen sich Betonanaloga - ohne die typischen negativen Eigenschaften des Beton (beispielsweise geringe Zugfestigkeiten nicht faserarmierten Betons, Verlust der Festigkeit bei Temperatur, Ausblüherscheinungen,...), basierend auf dessen hydraulischen Bindemittel - herzustellen. Grundlegendes und wichtigstes Unterscheidungsmerkmal ist die Verfestigung. Die phosphatischen Bindemittel reagieren unter physikalischer Verzahnung der Salze bzw. vorteilhafter durch Kondensationsreaktionen und bilden ein stabiles anorganisches dreidimensionales Netzwerk aus. Daher beschreibt die Erfindung eine Möglichkeit Beton ohne hydraulische Bindemittel aber durch Einsatz phosphatischer Bindemittel herzustellen. Durch die chemischen und physikalischen Eigenschaften der neuen Bindemittel können nun einfachste Mischungen zur Lösung von komplexen konstruktiven Aufgaben, insbesondere in sicherheitsrelevanten Bereichen, eingesetzt werden.

Die erfindungsgemäße Zusammensetzung wie beispielsweise ein Phosphatbeton kann durch eine Vielzahl weiterer Rohstoffe in seinen Eigenschaften gesteuert werden. Neben Additiven und Füllstoffen können spezielle Schaumbildner und Härter in der Zusammensetzung enthalten sein, die aus der erfindungsgemäßen Zusammensetzung wie beispielsweise einem Phosphatbeton ein sehr vielfältig einsetzbares Material machen.

Unter phosphatischen Bindemitteln sind vorzugsweise Alkaliphosphate, Polymeralkaliphosphate, Silikophosphate, Monoaluminiumphosphat, Borphosphat, Magnesiumnatriumphosphat, Alkalisilicophosphat, Phosphatglas, Zinkphosphate, Magnesiumphosphate, Calciumphosphate, Titanphosphate, Chromphosphate, Eisenphosphate und Manganphosphate zu verstehen. Ein alleiniger Einsatz dieser Phosphate wird allerdings bei Temperaturen unter 121°C nicht den gewünschten Effekt der Aushärtung bringen. Bei Temperaturen kleiner 121°C kommt es nur zum Abdampfen des Wassers und zur Ausbildung einer Salzkruste. Die erfindungsgemäßen Füllstoffe sind zwingend notwendig. Daher werden i.d.R. Beschichtungen auf phosphatischer Basis bei deutlich höheren Temperaturen ausgebildet, wie WO 01/87798 A2, DE 600 02 364 T2 oder auch US 3 775 318 deutlich darstellt. Besonders bevorzugt besteht das phosphatische Bindemittel zumindest zum Teil aus Monomer, Oligomer und/oder Polymerisat beispielsweise von Monoaluminiumphosphat.

Die phosphatischen Bindemittel als Matrix erzeugen eine hohe Chemikalienresistenz und Säurefestigkeit.

Das phosphatische Bindemittel im Sinne der Erfindung ist vorzugsweise eine polymerisierbare, anorganische Phosphatverbindung. Dadurch erhält die Zusammensetzung nach Aushärtung eine besonders hohe Festigkeit.

Zur Herstellen des neuen Betons oder betonartigen Werkstoffe, basierend auf neuen Zusammensetzungen auf Basis phosphatischer Bindemittel ist daher auch eine komplett neue Betonchemie gefordert.

Maßgeblich ist dabei das phosphatische Bindemittel, welches der Gruppe entstammt, die zuvor genannt wurde. Ohne gesichertes Wissen wird angenommen, dass das Bindemittel durch Kondensationsreaktionen vom monomeren in einen polymeren Zustand übergeht und dadurch das Bauteil verfestigt wird. Dieser Verfestigungsprozess wird durch große spezifische, teilweise leicht saure Oberflächen, wie sie beispielsweise bei verschiedenen nanopartikulären oder auch amrophen und teilkristallinen Systemen zu finden sind initiiert bzw. sogar katalysiert. Um das Reaktionsgleichgewicht entsprechend einzustellen, muss das Überschusswasser mit fortschreitender Reaktion abgeführt werden, was in der Regel schon durch den eigenen Dampfdruck geschieht. Die Größe der spezifischen Oberflächen der erfindungsgemäßen Füllstoffe liegt im Bereich von 120m²/g bis 250m²/g. In diesen Bereichen lassen sich insbesondere die Viskositätsparameter, die letztendlich bei der Art des Beton, also ob es sich um Spritzbeton, Ortbeton, Transportbeton, usw. handelt, ab besten Einstellen. Höhere spezifische Oberflächen zeigen weder Vor- noch Nachteile bzgl. der Härtung des phosphatischen Systems. Die Erfinder haben dabei herausgefunden, dass der minimale Gehalt an Partikeln mit den entsprechenden spezifischen Oberflächen keinen kritischen Faktor in der Gesamtzusammensetzung darstellt und sich sogar bei Zusammensetzungen mit geringen Gehalten von 0,2 bis 0,5 Gew.% an Partikeln mit hoher Oberfläche, der erfindungsgemäße Effekt erzielen lässt.

Neben der Aushärtung bei Temperaturen kleiner 121°C ergeben sich bei den, je nach Anwendungsfall angepassten, erfindungsgemäßen Zusammensetzungen zusätzliche Vorteile wie beispielsweise geringe Porosität, Nullschwindung, Druckfestigkeit oder aber auch deutlich erhöhte Zugfestigkeit.

Diese erklären sich aus dem Sachverhalt, dass, nicht wie bei Beton üblich sich langsam Nadeln ausbilden, sodass teilweise die Endfestigkeit erst innerhalb von 28 Tagen erreicht wird, sondern, dass sich durch die Polymerisationsreaktion ein dreidimensionales chemisches Bindemittelnetzwerk ausbildet.

Bevorzugtes Bindemittel aus der Gruppe der Alkaliphosphate, Polymeralkaliphosphate, Silikophosphate, Monoaluminiumphosphat (MAP), Borphosphat, Magnesiumnatriumphosphat, Alkalisilicophosphat, Phosphatglas, Zinkphosphate, Magnesiumphosphate, Calciumphosphate, Titanphosphate, Chromphosphate, Eisenphosphate und Manganphosphateist das Monoaluminiumphosphat (MAP). Vorteilhaft ist es das MAP als 50 bis 60%ige Lösung einzusetzen. Pulvermischungen, die im Nachhinein mit Wasser versehen werden sind ebenso möglich. Als Partikel mit großer spezifischer Oberfläche eignen sich insbesondere Systeme mit hydroxidischen Oberflächen, wie sie bei feinstteiligen Aluminiumoxid, Aluminiumhydroxid, Titanoxid, Ceroxid, Eisenoxid, sowie Zink-, Zinn- oder Zirkonoxid gegeben sind. Mischoxide sind genau so einsetzbar.

Zur Reduktion des Porengerüstes und zur Einstellung weiterer Eigenschaften zeigten sich überraschenderweise Sole aus der Gruppe sauer stabilisierter Sole, wie Kieselsol, Aluminiumsol, Titansol usw. geeignet. Generell können alle, dem Fachmann bekannten, feinstteiligen Pratikelsysteme (mit der entsprechenden Oberfläche) zur Reaktionsführung, sowie alle dem Fachmann bekannten Sole zur Einstellung diverser Eigenschaften, verwendet werden.

Die Zusammensetzung der übrigen Füllstoffe richtet sich in erster Linie nach der gewünschten Anwendung und Wirtschaftlichkeit.

Die BET-Oberfläche kann mit Hilfe des Messgerätes Mircomeretics ASAP 2010 gemäß der Norm DIN 66131 respektive DIN 66132 gemessen werden.

Beispielsweise kann durch den Einsatz geeigneter Füllstoffe, wie Pigmente, Farbstoffe, Verstäubungsphasen, Additiven, silciumorganischen Verbindungen usw. das erfindungsgemäße System in weiten Grenzen funktionalisiert werden.

Die Füllstoffe sind vorzugsweise inerte und/oder basische Füllstoffe. Inerte Füllstoffe dienen in der Regel der Kostenreduktion, lassen sich aber auch einsetzen um beispielsweise Leichtphoshatbetone zu fertigen.

In diese Gruppe fallen Materialien wie beispielsweise Quarz (Körnung richtet sich nach dem Andwendungsfall), Ziegel- und Porzellanmehl, Mineralien wie beispielsweise Christoballit, Muskovit oder Biotit, Oxide wie beispielsweise Aluminiumoxid oder Zirkonoxid, damit korrespondierende Oxid - Hydroxide, sowie andere inerte Füllstoffe wie Boratglas oder Siliciumcarbide.

Füllstoffe im Sinne der Erfindung können auch beispielsweise Naturstoffe wie Fasern (beispielsweise Holzfasern, Hanf, Sisal, Brennnessel, ...), Mehle oder Granulate (beispielsweise Holz oder Kork) sein. Die Fasern können beispielsweise auch Kunstfasern wie Glasfasern (keine spezielle Glasfaser notwendig - alle marktüblichen Typen lassen sich einsetzen), Kohlefasern oder beispielsweise Kevlarfasern sein.

Viele weitere Füllstoffe, auch wie sie bei der Standardbetonherstellung verwendet werden, können eingesetzt werden. Vorteilhaft lassen sich auch Carbide wie Borcarbid und Titancarbid, u.s.w oder auch Nitride wie Bornitrid oder Aluminiumnitrid. o.ä. einbringen. Die Partikelgrößen und Oberflächen sind hierbei weniger relevant als bei den Initiatorpartikeln.

Füllstoffe können beispielsweise auch basische Materialien wie beispielsweise Aluminiumnitrid oder Böhmit zu sehen, die aufgrund ihres leicht basischen Charakters verfestigende und damit eine "reaktive" Wirkung haben.

Die erfindungsgemäße Zusammensetzung enthält 5 bis 40 Gew.% anorganisches phosphatisches Bindemittel,
15 bis 30 Gew.% Wasser, und
30 bis 80 Gew.% aktive Füllstoffe.

Dies hat beispielsweise gegenüber den bislang bekannten Betonzusammenseztungen den Vorteil, dass mit wesentlich weniger Bindemittel, was klassischerweise Zement ist, ebenso eine vollständig durchhärtende Zusammensetzung bereitgestellt werden kann.

Das anorganische phosphatische Bindemittel ist vorzugsweise in einer Menge von 10 bis 30 Gew.% enthalten.

Die Zusammensetzung enthält vorzugsweise weniger als 50 Gew.%, insbesondere weniger als 10 Gew.% Calciumoxid. Dadurch scheint das phosphatische Bindemittel die Zusammensetzung besser aushärten zu können. Es wurde nämlich überraschend festgestellt, dass durch Calciumoxid die Zusammensetzung unkontrolliert aushärtet. An den Stellen, an denen die Calciumoxid-Kristalle auftreffen, wurde eine sofortige Verklumpung beobachtet.

Die Zusammensetzung enthält vorzugsweise weniger als 50 Gew.%, insbesondere weniger als 10 Gew.% Zinkoxid. Dadurch scheint das phosphatische Bindemittel die Zusammensetzung besser aushärten zu können.

Überraschenderweise wurde während der Entwicklung der erfindungsgemäßen Zusammensetzung wie beispielsweise einer Zusammensetzung für Phosphatbetons gefunden, dass verschiedene Substanzen als Härter beziehungsweise Katalysatoren zur Härtung oder beschleunigten Härtung eingesetzt werden können. Vorteilhafterweise sind daher in der erfindungsgemäßen Zusammensetzung auch Fluoriden als Härter und/oder basischen Härter (beispielsweise Fritten, Glasurmehle, basische Oxide und/oder Wasserglas) enthalten. Bei diesen Härtern spielt es auch keine Rolle, ob es sich um neue, frisch synthetisierte Materialien oder Recyclate handelt. So kann beispielsweise Zinkoxid (aus der Gruppe basischer Oxide) genauso eingesetzt werden wie diverser Wassergläser, unabhängig von der Art des Wasserglases. Analog sind keramische Rohstoffe wie Fritten und Glasurmehle zu betrachten. Der Härter ist vorteilhafterweise in einer Menge in einem Bereich von 0,1 bis 30 Gew.% in der erfindungsgemäßen Zusammensetzung enthalten. Vorteilhafterweise ist oder enthält der Härter nicht CaO.

Beispielsweise härtet eine Zirkonfritte die erfindungsgemäße Zusammensetzung wie einen Phösphatbeton in 24 Stunden aus, wohingegen eine Borosilikatglasfritte oder eine Calciumboratfritte für sofortige Härtung und Durchhärtung binnen 8 Stunden sorgt.

Eine Vielzahl an Härtern bietet beispielsweise die Gruppe der basischen Gesteinsmehle, wie beispielsweise Feldspat, Olivin oder Basalt.

Wird beispielsweise eine 50/50 (Gewichtsteile) Mischung aus MAP (Monoaluminiumphosphat) und Basalt eingesetzt, härtet der Phosphatbeton binnen 48 Stunden durch, zeigt aber ein geringes Verarbeitungsfenster von etwa 60 Minuten. Bei Varation der Mischung zu 75/25 bleibt die Gesamtreaktionszeit erhalten, wohingegen sich das Arbeitsfenster um bis zum 800% erweitert. Variiert man die Rezeptur in die entgegengesetzte Richtung (33/67), so erfolgt die Durchhärtung binnen 8 Stunden, allerdings auch bei einer Verarbeitungsdauer von etwa 15 Minuten.

Feldspate wie beispielsweise Nyphelinsyleit reduzieren die Härtungsdauer bis zur Endfestigkeit deutlich. Eine 50/50 Mischung MAP/Feldspat härtet binnen 24 Stunden bis zur Endfestigkeit durch, bei einem Verarbeitungsfenster von 10 Minuten. Eine Variation auf 90/15 erhält die Härtezeit und erweitert die Verarbeitungszeit deutlich (etwa 60 Minuten).

Eine 50/50 Mischung MAP/Olivin härtet binnen 4 Tagen aus und zeigt ein Verarbeitungsfenster von 2-3 Stunden.

Extrem kurze Härtungzeiten wurden beim Einsatz von Sodalit beobachtet.

Vorteilhafterweise sind in der erfindungsgemäßen Zuaammensetzung auch Inhibitoren in einem Bereich von 0,01 bis 5 Gew:% enthalten. Die Reaktionsparameter, insbesondere die freie Topzeit/Verarbeitungszeit kann durch entsprechende Inhibitoren gesteuert werden, und daher auch Formulierungen beispielsweise für Transportbeton aufgebaut werden können. Dies können übliche Inhibitoren aus bekannten Betonzusammensetzungen sein.

Vorzugsweise sind in der erfindungsgemäßen Zusammensetzung auch Leichtmaterialien in einem Bereich von 1 bis 30 Gew.%, insbesondere in einem Bereich von 10 bis 25 Gew.% enthalten. Durch geeignete Leichtmaterialien wie beispielsweise Styropor, Glashohlkugeln oder EPS-Schaumkugeln lassen sich erfindungsgemäße Zusammenseztungen wie beispielsweise Phosphatleichtbetone mit Dichten um 0,3 erzielen. Die Leichmaterialien können weiterhin für Anwendungen im Bereich der akkustischen und thermischen Isolierung genutzt werden. Wärmedämmende Materialien können durch eine einfache Umformulierung auch als Brandschutzplatten oder Gießmasse eingesetzt werden, da die Matrix u.a. eine Temperaturstabilität zwischen 1.500°C und 1.800°C aufweist.

Andererseits kann es auch bevorzugt sein, dass die erfindungsgemäße Zusammensetzung Schwermaterialien in einem Bereich von 1 bis 30 Gew.%, insbesondere in einem Bereich von 10 bis 25 Gew.% enthält. Der Einsatz von Blei, Eisenoxiden und ähnlichen Schwermaterialien ermöglicht erfindungsgemäße Zusammensetzungen wie Phoshphatschwerbetone mit Dichten bis zu 3,6.

Die erfindungsgemäße Zusammensetzung kann vorteilhafterweise auch Zusatzstoffe wie Verflüssiger, Gelbildner, Thixotropierer, Schaumbildner usw. enthalten. Besonderes bevorzugt sind Reaktionsbeschleuniger und/oder Reaktionsverzögerer enthalten. Beispielsweise wirken Borsäure, bestimmte Mineralsäuren (phosphor- und Salzsäure) sowie saure Tone als Reaktionsverzögerer, welche sich sowohl auf Verarbeitung als auch auf Härtung auswirken können. Ähnliches, nur in umgekehrtem Sinne, gilt für die Reaktionsbeschleuniger, wie beispielsweise für Schwefelsäure, Sulfide, Boride aber auch für Lehm und verwandte Materialien.

In der erfindungsgemäßen Zusammensetzung sind als Zusatzstoffe vorteilhafterweise auch carbonathaltige Materialien wie beispielsweise Dolomit oder Kalk enthalten, da sich hierdurch recht leicht Betonschäume darstellen lassen, die durch Variation von Konzentration, Zusatz von Micellenbildnern, Stabilisatoren, usw. in Blasengröße, Offen- oder Geschlossenporigkeit variiert werden können.

Die Erfindung eignet sich aufgrund einer Vielzahl positiver, dem Stand der Technik deutlich überlegener Parameter für vielfältige Anwendungen wie Leichtbeton, Schwerbeton, Faserbeton, hochfester Beton, ultrahochfester Beton, Isolierbeton, Strahlenschutzbeton, u.s.w..

Die der Erfindung zu Grunde liegende Aufgabe wird durch die Verwendung der erfindungsgemäßen Zusammensetzung zur Herstellung von ausgehärtetem Beton, Putz, Fugenmasse, Betonersatz, Estrich, Mörtel, Schaum oder anorganischem Klebstoff, gelöst.

Die der Erfindung zu Grunde liegende Aufgabe wird durch ein Verfahren zur Herstellung eines Betonformkörpers durch Aushärten der erfindungsgemäßen Zusammensetzung gelöst.

Die der Erfindung zu Grunde liegende Aufgabe wird durch einen Betonformkörper enthaltend eine Zusammensetzung gemäß Anspruch 1 gelöst.

Der Betonformkörper enthält vorzugsweise weniger als 50 Gew.%, insbesondere weniger als 10 Gew.% Calciumoxid. Dadurch scheint das phosphatische Bindemittel die Zusammensetzung besser aushärten zu können.

Der Betonformkörper enthält vorzugsweise weniger als 50 Gew.%, insbesondere weniger als 10 Gew.% Zinkoxid. Dadurch scheint das phosphatische Bindemittel die Zusammensetzung besser aushärten zu können.

Der erfindungsgemäße Betonformkörper ist erhalten nach dem erfindungsgemäßen Verfahren.

### Beispiele

Im Folgenden werden Ausführungsbeispiele und besondere Varianten des erfindungsgemäßen Systems dargestellt.

### Beispiel 1:

Ein erstes Aufführungsbeispiel wies folgende Zusammensetzung in Gewichtsprozent auf:
MAP: 40% (40 Gew.%ige Lösung in Wasser)
Christoballit: 20%
Quarz: 20%
Aluminiumoxid: 10%
Borsäure: 2%
Farbkörper: 8%

Zur Bestimmung der Festigkeitsklassen wurden Probekörper gemäß DIN 1045-1:2001-07 gefertigt. Die Verfestigung der erfindungsgemäßen Zusammensetzung erfolgte binnen 2 Tagen, nicht wie bei Beton üblich über 28 Tage. Die mechanischen Kennwerte der o.g. Zusammensetzung beliefen sich auf eine Druckfestigkeit von 63 N/mm² und eine Zugfestigkeit von 7,9 N/mm².Gemäß der Druckfestigkeit entsprach diese Zusammensetzung einem C60/65 Standardbeton, welcher allerdings nur eine Zugfestigkeit von 4,4 N/mm² aufbringt. Ein weiterer Vorteil dieses Probekörpers war die geringe Wärmeleitfähigkeit von 1,2 W/mK, im Gegensatz zu 2,1 W/mK des C60/65 Betons. Die Wärmedehnung bei 80°C ergab einen Wert von 5*10⁻⁶ 1/k, bei einer Rohdichte von 2.225 kg/m³. Neben diesen, den Standardbeton, deutlich verbesserten Eigenschaften konnten die Erfinder feststellen, dass sich Zusammensetzungen auf Basis phosphatischer Bindemittel problemlos mit Pigmenten und einen Großteil von Farbstoffen durchfärben ließen. Weiterhin kam es, aufgrund des Fehlens von Porenwasser und Zementstein nicht zur Bildung von Ausblühungen (CaCO₃).

Durch die Art des Bindemittels war auch eine hohe Säureresistenz zu erkennen, welche sich bei unterirdischem Einsatz des Betons (Stabilität gegen übersäuerte Böden und sauren Regen) auf die chemische und physikalische Stabilität sehr positiv auswirkte.

### Beispiel 2:

Eine weitere Ausführungsform der Erfindung wies folgende Zusammensetzung auf.
MAP: 30% (40 Gew.%ige Lösung in Wasser)
Christoballit: 20%
Hämatit: 40%
Borcarbid: 5%
Bornitrid: 5%

Nach 48 Stunden Härtezeit resultierte eine mögliche Zusammensetzung von Schwerbeton, mit einer Rohdichte von 2,9kg/dm³. Mit dieser Dichte und Zusatzstoffen wie Borverbindungen ließ sich die erfindungsgemäße Zusammensetzung auch als Reaktorbeton einsetzen. Besonders positiv zeichnete sich dieses Material deshalb aus, da es auch bei erhöhten Betriebstemperaturen durch den Verlust von Wasser nicht zu einem Festigkeitseinbruch kam. Bei "normalem" Beton beläuft sich dieser Festigkeitsverlust bei Temperaturen zwischen 100°C und 250°C bereits auf 20 bis 25%. Da dieser Mechanismus bei Zusammensetzungen auf Basis phosphatischer Bindemittel nicht eintritt, konnten die erfindungsgemäßen Zusammensetzungen auch als Material für Reaktordruckbehälter eingesetzt werden bei denen Neutronenstrahlungen einer Fluenz von mehr als 10¹⁹ Neutronen/cm² bzw. Gammastrahlen mit einer Dosis von 2*10¹⁴ J/g auftraten. Durch entsprechende Ausgestaltung der Formulierung konnten weitere positive Materialeigenschaften problemlos erreicht werden.

### Beispiel 3:

### Putz :

Als besondere Variante des Mörtels wurde Putz an Außen- und Innenwänden sowie Decken aufgebracht. Die Verarbeitung, also ob es sich um einen Kratzputz, einen Reibeputz, einen Kellenstrichputz oder andere Varianten handelt, oder die Funktionalität (z.b. Akkustik- oder Wärmedämmputz) konnten additiv in solche Rezepturen miteinfließen. Die bauphysikalischen Grundeigenschaften (z.B. bei Innenputzen: Aufnehmen von Raumfeuchte, speichern und Wiederabgage) waren auch bei dem Phosphatputz in einer 1,5cm dicken Schicht gegeben.
35 % einer 40 Gew.%igen MAP-Lösung
5 % Polyphosphorsäüre
15 % Cristobalitmehl (d90< 40µm)
5% Spodumen (d50< 40 µm)
16% AIN-Grade B
9% Calciumboratfritte
10 % Kieselsol Lithosol L1540
2% Al-pulver ( d50< 5µm)
2% Arbocel BC 200
1% Culminal MHPC 20000
1% Scothlite S22
4% Wasser

Diese Formulierung konnte durch Kunstharzdispersionen Richtung Kunstharz- und Hybridputz erweitert werden.

### Beispiel 4:

### Fugenmasse:

Fugenmassen oder Fugenmörtel, wie in dieser Rezeptur wurden zur Ausfüllung von Fugen und Rissen eingesetzt. Aufgrund der hohen Säurestabilität eignete sich die hier beschriebene Masse u.a. zum Einsatz in Bädern, Küchen aber auch im Abwasserbereich.
40 % einer 50% Gew.%igen MAP-Lösung
9 % Aluminiumoxid APA05
15 % Cristobalitmehl (d90< 40µm)
5 % Böhmit (d50< 60 nm)
5 % Bosä u re
2% Magnesit
3% Knochensasche ( d50 < 1µm)
8% Iriodin 9103
3% ZnO (d90< 1µm)
10 % Vinapas 4053

### Beispiel 5:

Beton mit integriertem Korrosionsschutz:
Die Bewehrung und Armierung von Stahlbeton durch Stahl ist immer der Korrosionsgefahr ausgesetzt. Erhöhtes Korrosionspotential bietet dabei die Chlordihaltige Luft an der Küste und im off-shore-Bereich. Chlorinduzierte Bewehrungskorrosion ist hierbei Standard. Als Schutzmaßnahmen werden die Stähle durch Chromatieren und phosphatieren veredelt. Bei der Phosphatierung wir Zink- und Mangandihydrogenphosphat eingesetzt.

Durch den phosphatischen Grundcharakter des Phosphatbetons wurden diese Maßnahmen deutlich unterstützt. Zudem wurde die übliche Passivierung auch im sauren Bereich durchgeführt. Das gebundene Phopshat und die partiell anteilige Phosphorsäure dienten gleichzeitig als Rostumwandler.
50 % einer 60% MAP-Lösung
0,5 % Natriumglutamat
3,5 % Polyphosphorsäure
6 % Kieselsol sauer 30%
4% Lithiumacetat
10% Hydroxylapatit
10% Zinkphosphat
5% Lithiumphosphat
28 % Westerwälder Phonolit (d50<63µm)
7% GMW 603 ( Lehm von Wirth Tonbergbau)
4% Phosphorsäure

Die chlorinduzierte Bewehrungskorrosion konnte deutlich verbessert werden. Die Korrosiosngeschwindigkeit ging zurück von bis zum 1.000µm pro Jahr (carbonatisierter Beton bei hoher Chlorid-Belastung) und konnte auf weniger als 100 µm pro Jahr bei dem erfindungsgemäßen Phosphatbeton gemäß Beispiel 5 reduziert werden.

### Beispiel 6:

### Klebstoffe:

Anorganische Klebstoffe setzen sich üblicherweise zusammen aus Glasgrundbestandteilen wie SiO₂, Na₂CO₃, B₂O₃ oder Al₂O₃ und metallischen Bestandteilen wie Nickel, Eisen, Kupfer oder pulverisierten Loten. Entsprechend den Schmelztemperaturen dieser Substanzen sind die Verarbeitungstemperaturen relativ hoch.

Aufgrund des chemischen Vernetzens konnte der erfindungegemäße Phosphatbeton aber auch als kalthärtender "Klebstoff" im Verbund eingesetzt werden. Die folgende Rezeptur beschreibt einen Kleber, der beispielsweise Gipskartonplatten auf Holz verkleben konnte.
50 % einer 46% MAP-Lösung
12 % Engelhardt Lumina Russet
3 % Scotchlite S22
1% Phenolharzkugeln
16 % Olivin NRII
4 % Zinkborat
8 % eines SiO-Gels (d90< 700 nm ; 32% in Dowanol)
3% Glycerin
3% Fischleim

### Beispiel 7:

### Faserbeton:

Bei herkömmlichem Beton ist die Auswahl an Fasern stark begrenzt. Beispielsweise lassen sich nur speziell hergestellte Alkaliresistente Glasfasern einsetzen, nicht aber normale Glasfasern oder Gewebe. Die Fasern dienen letztendlich der Erhöhung der Zugfestigkeit, Gewichtsreduktion oder Verbesserung der Brandfestigkeit (PP-Fasern). Neben einfachen Fasern lassen sich auch komplette Rovings einarbeiten.

Das Anwendungsbeispiel führt einen mit Kurzfasern bewehrten Beton auf.
40 % einer 50% MAP-Lösung
10% eines SiO-Gels (d90< 700 nm ; 32% in Dowanol)
10 % Basaltfaser 3mm
10% Basaltmehl d50< 100 µm
10 % Basaltmehl 0,5-1,5mm
5% Granitsand 0,1-0,5 mm
2% Wollastonit
4% Aramidfasern
2% Glaspättchen 140µm
7% Siliciumnitrid Von SKW Trostberg

Die Grundzusammensetzung (ohne Fasern) entsprach der eines C80/C95 Betons. Der zementhaltige Beton wies hier eine Zugfestigkeit von 4,8 N/mm², gem. DIN 1045-1 auf. Der nicht-Faser-bewehrte Phosphatbeton zeigt schon eine deutliche bessere Zugfestigkeit von 19,8 N/mm² gem. DIN 1045-1. Bei einem Faseranteil von 4% Aramid-Fasern und 10% Basaltkurzfasern erhöhte sich die Zugfestigkeit auf 223 N/mm², ein Wert, der normalerweise erst mit kompletten Rovings erreicht wird.

## Patentansprüche

1. Zusammensetzung, umfassend ein Bindemittel, das zumindest teilweise aus einem anorganischen phosphatischen Bindemittel besteht, und aktive Füllstoffe aus Oxiden, Hydroxiden oder Oxidhydroxiden aus der Gruppe Aluminium, Titan, Zirkon, Zink, Zinn, Cer oder Eisen, wobei diese eine spezifische BET Oberfläche von 120 m²/g bis 250 m²/g aufweisen, sowie eine oxidische, hydroxidische, oder oxyhydroxidische Oberfläche besitzen, wobei die Zusammensetzung 5 bis 40 Gew.% anorganisches phosphatisches Bindemittel, 15 bis 30 Gew.% Wasser, und 30 bis 80 Gew.% aktive Füllstoffe enthält.

2. Verwendung der Zusammensetzung gemäß Anspruch 1 zur Herstellung von ausgehärtetem Beton, Putz, Fugenmasse, Betonersatz, Estrich, Mörtel, Schaum oder anorganischem Klebstoff.

3. Verfahren zur Herstellung eines Betonformkörpers durch Aushärten der Zusammensetzung gemäß Anspruch 1.

4. Betonformkörper enthaltend eine Zusammensetzung gemäß Anspruch 1.

## Claims

1. A composition comprising a binder which consists at least partially of an inorganic phosphatic binder and active oxide, hydroxide or oxide hydroxide fillers from the group of aluminium, titanium, zirconium, zinc, tin, cerium or iron, wherein said fillers have a specific BET surface area from 120 m²/g to 250 m²/g and an oxidic, hydroxidic or oxyhydroxidic surface, wherein the composition contains from 5 to 40% by weight of inorganic phosphatic binder, from 15 to 30% by weight of water and from 30 to 80% by weight of active fillers.

2. Use of the composition according to claim 1 for preparing hardened concrete, plaster, joint sealer, concrete replacement, screed, mortar, foam or inorganic adhesive.

3. A process for preparing a concrete moulded body by hardening the composition according to claim 1.

4. A concrete moulded body containing a composition according to claim 1.

## Revendications

1. Composition comprenant un liant, qui est constitué au moins partiellement d'un liant phosphatique inorganique, et des charges actives constituées par des oxydes, des hydroxydes ou des oxyhydroxydes du groupe comprenant l'aluminium, le titane, le zirconium, le zinc, l'étain, le cérium ou le fer, qui présente une surface spécifique BET de 120 m²/g à 250 m²/g, et possède un surface oxydique, hydroxidique ou oxyhydroxidique, ladite composition comprenant entre 5 et 40 % en poids de liant phosphatique inorganique, 15 à 30 % en poids d'eau et 30 à 80 % en poids de matières de charges actives.

2. Utilisation de la composition selon la revendication 1 pour la production de béton durci, de crépi, de pâte à joints, de substitut de béton, de chape, de mortier, de mousse ou d'adhésif inorganique.

3. Procédé de fabrication d'un corps moulé en béton par durcissement de la composition selon la revendication 1.

4. Corps moulé en béton comprenant une composition selon la revendication 1.
